# EUROPEAN PATENT APPLICATION

(11) **EP 4 084 290 A1**
(43) Date of publication of application: **02.11.2022**
(21) Application number: 20905898.1
(22) Date of filing: 24.12.2020
(51) Int. Cl.: H02K 1/16, H02K 1/14, H02K 1/27, H02K 7/00

(54) **STATOR FOR ELECTRIC MOTOR AND ELECTRIC MOTOR COMPRISING SAME**

(30) Priority: 26.12.2019 KR 20190175422; 23.12.2020 KR 20200181724
(71) Applicant: Amotech Co., Ltd., Incheon 21629 (KR)
(72) Inventor: KIM, Byung Soo, Incheon 21629 (KR)
(74) Representative: SONN Patentanwälte OG
(86) International application number: PCT/KR2020/019063
(87) International publication number: WO 2021/133083

(57) **Abstract**

A stator for an electric motor is provided. A stator for an electric motor according to an example embodiment of the present invention comprises: at least one coil; and a stator core including a yoke formed in a closed loop shape and a slot part extended from the yoke by a predetermined length. The slot part includes a plurality of slots forming a multi-phase including a first phase and a second phase different from the first phase. The total number of turns obtained by summing up the turns of the coils respectively wound on the plurality of slots forming the first phase may be the same as the total number of turns obtained by summing up the turns of the coils respectively wound on the plurality of slots forming the second phase.

## Description

### [Technical Field]

The present invention relates to a stator for an electric motor and an electric motor including the same.

### [Background Art]

Electric motors are devices configured to generate a driving force using electric energy. The electric motors are widely applied to various electronic devices, home appliances, vehicles, or the like.

For example, the electric motors are applied to a vehicle engine to provide a driving force for driving an intake valve.

Meanwhile, in recent years, various efforts have been made to improve the output and efficiency of the vehicle engine, and improving intake efficiency by adjusting an intake valve timing is also part of these efforts.

The intake valve is opened and closed by reciprocating a drive rod connected to the intake valve through driving of a motor. To this end, an electric motor configured to operate the drive rod of the intake valve is installed in an engine room.

However, since various parts are installed in the engine room of the vehicle, there is a limitation of an installation space.

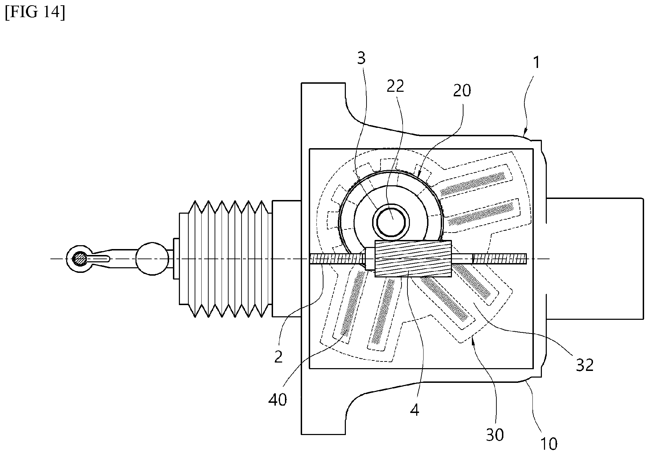

Accordingly, there is a limit in that a conventional electric motor 1 for driving a vehicle valve including a rotor 20 and a stator 30 inevitably has a rotor shaft 22 of the rotor 20 eccentrically connected to a drive rod 2 via a worm wheel 3 and a worm gear 4 as shown in FIG. 14.

That is, there is a limit that a slot 32 on which a coil 40 is wound in the stator 30 may be inevitably formed in a direction tilted to one side of a housing 10 when considering the connection between the rotor shaft 22 and the drive rod 2 due to the space constraint in the engine room.

However, when the slot 32 on which the coil 40 is wound in the stator 30 is formed in an asymmetric shape, the overall size of the stator 30 is inevitably reduced, so that there is a problem that the driving force of the motor or the output of the motor is reduced.

### [Technical Problem]

The present invention has been made in consideration of the above point, and is directed to providing a stator for an electric motor capable of improving efficiency of a motor and securing a degree of freedom in design without changing an existing mounted position even when the electric motor is mounted in a limited installation space like an engine room, and an electric motor including the same.

### [Technical Solution]

To achieve the object, one aspect of the present invention provides a stator for an electric motor including: at least one coil; and a stator core including a yoke formed in a closed loop shape, and a slot part extending from the yoke by a certain length, wherein the slot part includes a plurality of slots forming a multi-phase including a first phase and a second phase different from the first phase, and the total number of turns obtained by summing up the number of turns of the coil each wound around the plurality of slots forming the first phase is the same as the total number of turns obtained by summing up the number of turns of the coil each wound around the plurality of slots forming the second phase.

In addition, at least some of the plurality of slots may be formed so that lengths of teeth on which the coil is wound are different from each other.

In addition, the plurality of slots may be formed to extend inward from the yoke by a certain length. In this case, the stator for an electric motor may be applied to an internal rotor type electric motor.

Alternatively, the plurality of slots may be formed to extend outward from the yoke by a certain length. In this case, the stator for an electric motor may be applied to an external rotor type electric motor.

In addition, the yoke may be formed in a non-circular shape including at least one straight portion.

At this time, the yoke may include: a first arc portion formed to have a predetermined curvature; a second arc portion formed to have a predetermined curvature, and disposed not to be connected to the first arc portion; a first straight portion configured to interconnect one end of the first arc portion and one end of the second arc portion; and a second straight portion configured to interconnect the other end of the first arc portion and the other end of the second arc portion.

In addition, the second straight portion may include a first portion connected to an end of the first arc portion, and a second portion connected to an end of the first portion and connected to an end of the second arc portion, and the second portion may be connected to one end of the first portion to have a predetermined angle except for 0 degrees with the first portion.

In addition, the first arc portion and the second arc portion may also be formed to have the same lengths but may be formed to have different lengths.

In addition, the slot part may be formed in three phases including U, V, and W phases.

Meanwhile, another aspect of the present invention provides an electric motor including: a housing; a rotor including a rotor shaft rotatably mounted in the housing and a plurality of magnets disposed in a circumferential direction of the rotor shaft; and the above-described stator fixed to the housing, and in which a coil is wound around at least one slot.

In addition, the rotor shaft may be gear-coupled to a drive rod entering an inside of the housing via a gear unit, and the drive rod may be eccentrically connected to the rotor shaft via the gear unit.

### [Advantageous Effects]

According to the present invention, it is possible to implement high output and efficiency even when an electric motor is mounted at the same position as before without redesigning surrounding related parts even in a limited installation space like an engine room.

In addition, according to the present invention, it is possible to increase a degree of freedom in design by freely changing the teeth length of a slot on which a coil is wound.

### [Description of Drawings]

FIG. 1 is a view showing a stator for an electric motor according to one embodiment of the present invention.
FIG. 2 is a view showing a state in which a coil has been removed in FIG. 1.
FIG. 3 is a plan view of FIG. 2.
FIG. 4 is a view showing the arrangement relationship between a slot part of a stator core and a magnet of a rotor in the stator for an electric motor according to one embodiment of the present invention.
FIG. 5 is a view showing another form of the stator core applicable to FIG. 4.
FIG. 6 is a view showing still another form of the stator core applicable to FIG. 4.
FIG. 7 is a view showing a stator for an electric motor according to another embodiment of the present invention.
FIG. 8 is a view showing a state in which a coil has been removed in FIG. 7.
FIG. 9 is a view showing the arrangement relationship between a slot part of a stator core and a magnet of a rotor in the stator for an electric motor according to another embodiment of the present invention.
FIG. 10 is a view showing an electric motor to which the stator for an electric motor according to one embodiment of the present invention is applied.
FIG. 11 is a view showing a rotor and a stator extracted from FIG. 10.
FIG. 12 is a view schematically showing a state in which the electric motor of FIG. 10 is connected to a drive rod.
FIG. 13 is a view showing a rotor, a stator, and the drive rod extracted from FIG. 12.
FIG. 14 is a schematic view showing the connection relationship between a drive rod and a rotor shaft in a conventional electric motor.

### [Modes of the Invention]

Hereinafter, embodiments of the present invention will be described in detail with reference to the accompanying drawings so that those skilled in the art may easily carry out the present invention. The present invention may be implemented in many different forms and is not limited to the embodiments described herein. To clearly describe the present invention in the drawings, parts irrelevant to the description are omitted, and the same reference numerals are added to the same or similar elements throughout the specification.

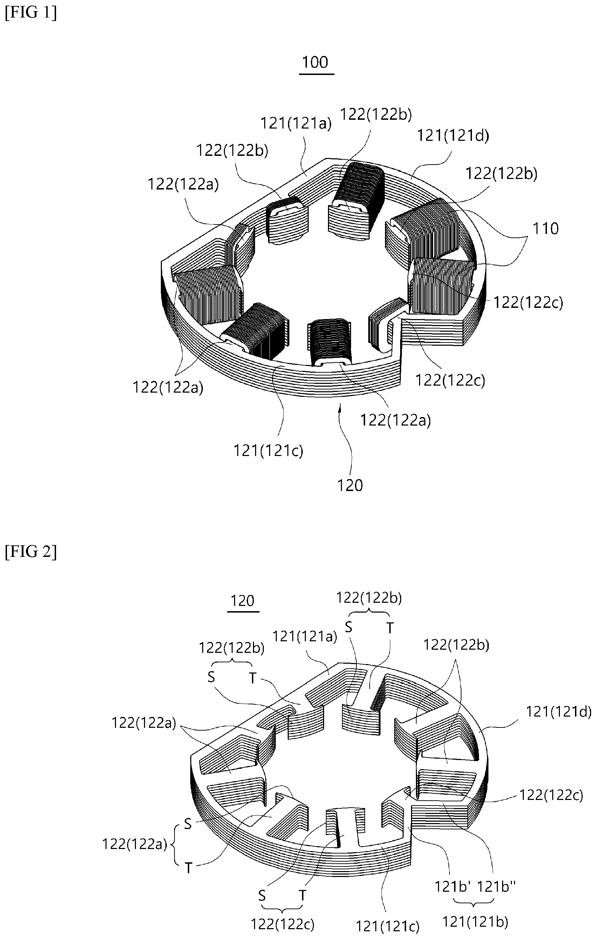

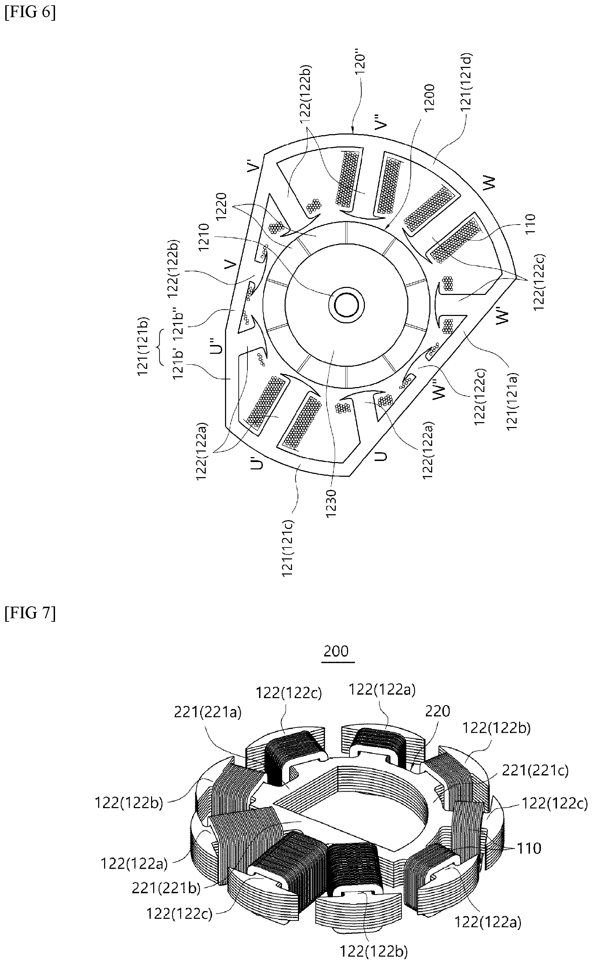

As shown in FIGS. 1 and 7, stators 100 and 200 for an electric motor according to one embodiment of the present invention may include at least one coil 110 and stator cores 120 and 220, and the at least one coil 110 may be wound around the stator cores 120 and 220.

That is, the stator cores 120 and 220 may include yokes 121 and 221 and a slot part 122, and the coil 110 may be wound around the slot part 122.

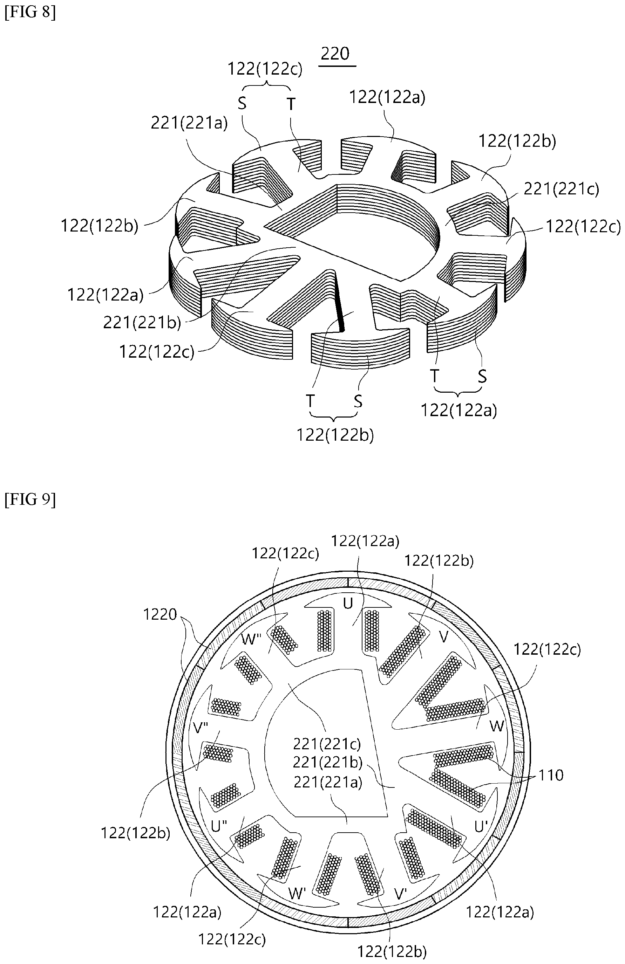

As shown in FIGS. 2 and 8, the stator cores 120 and 220 may have a form in which a plurality of metal sheets including each of the yokes 121 and 221 and the slot part 122, are stacked in a multi-layered form, but are not limited thereto and may also be formed as one member.

At this time, the yokes 121 and 221 may be formed in a closed loop shape.

For example, the yokes 121 and 221 may be formed in a non-circular shape including the one or more straight portions 121a, 121b, 221a, and 221b.

That is, as shown in FIGS. 1 to 9, the yokes 121 and 221 may include the one or more straight portions 121a, 121b, 221a, and 221b and the one or more arc portions 121c, 121d, and 221c formed to have a predetermined curvature, and the straight portions 121a, 121b, 221a, and 221b and the arc portions 121c, 121d, and 221c may be connected to each other.

Accordingly, the yoke 121 may have a non-circular closed loop shape by connecting the straight portions 121a, 121b, 221a, and 221b and the arc portions 121c, 121d, and 221c.

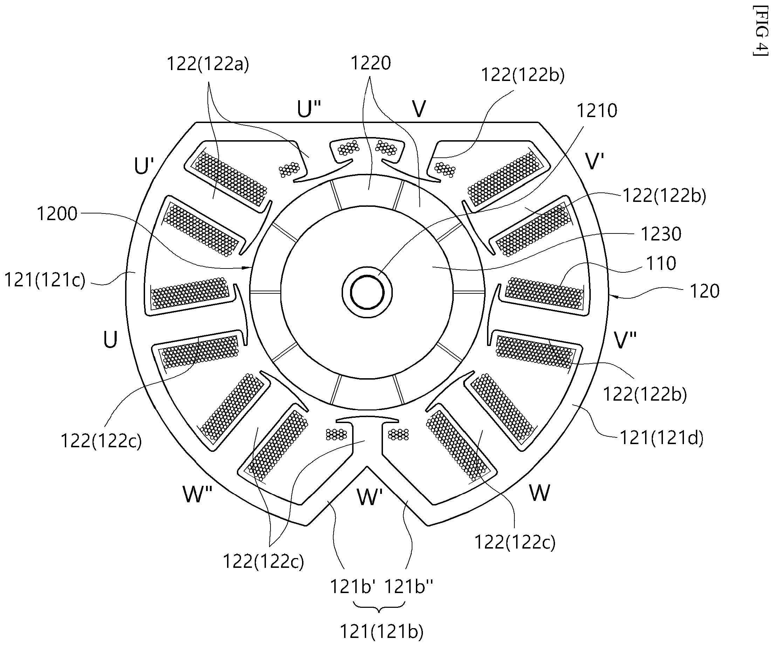

As a non-limiting example, as shown in FIGS. 4 to 6, the yoke 121 in stator cores 120, 120', and 120" may be formed in a non-circular closed loop shape through the arc portions 121c and 121d including a first arc portion 121c and a second arc portion 121d and the straight portions 121a and 121b including a first straight portion 121a and a second straight portion 121b.

In this case, the first arc portion 121c and the second arc portion 121d may not be connected to each other, and the first straight portion 121a and the second straight portion 121b may each connect ends of the first arc portion 121c and the second arc portion 121d.

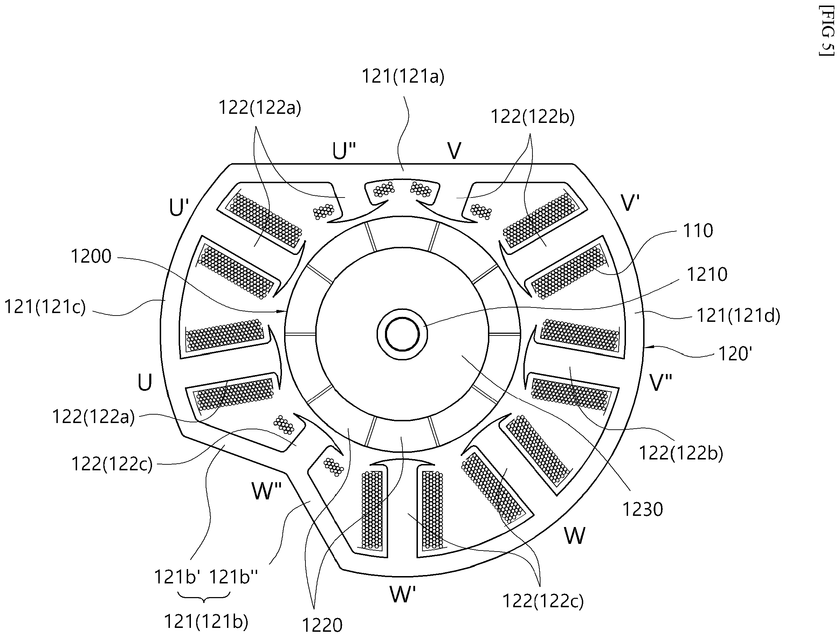

At this time, as shown in FIGS. 1 to 4, the first arc portion 121c and the second arc portion 121d in the stator core 120 may also be formed to have the same length, but as shown in FIGS. 5 and 6, the first arc portion 121c and the second arc portion 121d in the stator cores 120' and 120" may also be formed to have different lengths.

In addition, as shown in FIGS. 1 to 6, at least any one of the first straight portion 121a and the second straight portion 121b in the stator cores 120, 120', and 120" may be formed so that a length 121b' of a part, which is not a straight line, has a predetermined angle with the remaining length 121b".

Accordingly, the yoke 121 may be changed to various shapes depending on the arrangement position, lengths, and shapes of the first straight portion 121a and/or the second straight portion 121b that interconnect the first arc portion 121c and the second arc portion 121d.

As a specific example, as shown in FIG. 4, the first arc portion 121c and the second arc portion 121d in the stator core 120 may be formed to have the same lengths, the first straight portion 121a interconnecting one end of the first arc portion 121c and one end of the second arc portion 121d may be formed in a straight line, and the second straight portion 121b interconnecting the other end of the first arc portion 121c and the other end of the second arc portion 121d may include a first portion 121b' and a second portion 121b" connected to form a predetermined angle.

In this case, the first portion 121b' may have one end connected to an end of the first arc portion 121c and the other end connected to the second portion 121b", and the second portion 121b" may have one end connected to an end of the second arc portion 121d and the other end connected to the first portion 121b'.

At this time, the second portion 121b" may be connected to one end of the first portion 121b' to have a predetermined angle except for 0 degrees with the first portion 121b', and a portion where the first portion 121b' and the second portion 121b" are connected to each other may be connected to protrude into the yoke 121.

As another example, as shown in FIG. 5, the first arc portion 121c and the second arc portion 121d in the stator core 120' may be formed to have different lengths, the first straight portion 121a interconnecting one end of the first arc portion 121c and one end of the second arc portion 121d may be formed in a straight line, and the second straight portion 121b interconnecting the other end of the first arc portion 121c and the other end of the second arc portion 121d may include a first portion 121b' and a second portion 121b" connected to form a predetermined angle.

In this case, the first portion 121b' may have one end connected to an end of the first arc portion 121c and the other end connected to the second portion 121b", and the second portion 121b" may have one end connected to an end of the second arc portion 121d and the other end connected to the first portion 121b'.

At this time, the second portion 121b" may be connected to one end of the first portion 121b' to have a predetermined angle except for 0 degrees with the first portion 121b', and a portion where the first portion 121b' and the second portion 121b" are connected to each other may be connected to protrude into the yoke 121.

As still another example, as shown in FIG. 6, the first arc portion 121c and the second arc portion 121d in the stator core 120" may be formed to have different lengths, the first straight portion 121a interconnecting one end of the first arc portion 121c and one end of the second arc portion 121d may be formed in a straight line, and the second straight portion 121b interconnecting the other end of the first arc portion 121c and the other end of the second arc portion 121d may include a first portion 121b' and a second portion 121b" connected to form a predetermined angle.

In this case, the first portion 121b' may have one end connected to an end of the first arc portion 121c and the other end connected to the second portion 121b", and the second portion 121b" may have one end connected to an end of the second arc portion 121d and the other end connected to the first portion 121b'.

At this time, the second portion 121b" may be connected to one end of the first portion 121b' to have a predetermined angle except for 0 degrees with the first portion 121b', and a portion where the first portion 121b' and the second portion 121b" are connected to each other may be connected to protrude to the outside of the yoke 121.

Accordingly, the yoke 121 may have a closed loop shape of various shapes including a straight portion other than a circular shape.

As yet another example, as shown in FIGS. 7 to 9, the yoke 221 in the stator core 220 may be formed in a non-circular closed loop shape through two straight portions 221a and 221b each having one end connected to each other, and one arc portion 221c having both ends each connected to the two straight portions 221a and 221b.

As described above, the yokes 121 and 221 in the stator cores 120 and 220 according to one embodiment of the present invention may be formed in a closed loop shape of various shapes through the interconnection between the one or more straight portions 121a, 121b, 221a, and 221b and the one or more arc portions 121c, 121d, and 221c.

However, the shapes of the yokes 121 and 221 are not limited thereto, and the yokes 121 and 221 may be formed only of the above-described straight portions 121a, 122b, 221a, and 221b, may be formed only of the arc portions 122c, 122d, and 221c, and may also be formed in a circular shape. In addition, the yokes 121 and 221 may also be formed in a form in which at least two portions having different curvatures are interconnected.

The coil 110 configured to generate a magnetic field when power is applied may be wound around the slot part 122. To this end, the slot part 122 may extend inward or outward from the yokes 121 and 221 by a predetermined length so that the coil 110 may be wound with a predetermined number of turns.

For example, as shown in FIGS. 1 to 6, the slot part 122 may extend inward from the yoke 121 by a predetermined length.

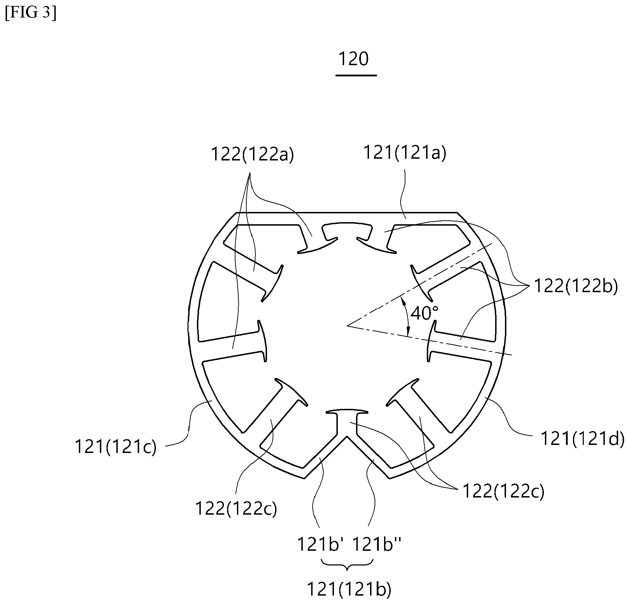

The slot part 122 may include a plurality of slots 122a, 122b, and 122c disposed to be spaced apart from each other along an edge of the yoke 121 and protruding inward from the edge of the yoke 121 by a predetermined length, and the plurality of slots 122a, 122b, and 122c may be disposed to form an isometric angle with respect to a virtual center point as shown in FIG. 3.

Accordingly, as shown in FIGS. 4 to 6, when a rotor 1200 configuring an electric motor 1000 is disposed to be positioned at the center of the yoke 121 together with a magnet 1220, the plurality of slots 122a, 122b, and 122c may be disposed to surround the rotor 1200, and the plurality of slots 122a, 122b, and 122c may be disposed at equal angles along a circumference of the rotor 1200. Accordingly, the electric motor 1000 may be implemented as an internal rotor type motor.

As another example, as shown in FIGS. 7 to 9, the slot part 122 may extend from the yoke 221 to the outside by a certain length.

The slot part 122 may include a plurality of slots 122a, 122b, and 122c disposed to be spaced apart from each other along an edge of the yoke 221 and protruding outward from the edge of the yoke 221 by a predetermined length, and the plurality of slots 122a, 122b, and 122c may be disposed to form an isometric angle with respect to a center point of the yoke 221.

Accordingly, as shown in FIG. 9, when the magnet 1220 of the rotor configuring the electric motor is disposed outside the yoke 221, the plurality of slots 122a, 122b, and 122c may be surrounded by the magnet 1220. Accordingly, the electric motor may be implemented as an external rotor type motor.

At this time, the slot part 122 may be formed to have a multi-phase including a first phase and a second phase different from the first phase, and at least some of the plurality of slots 122a, 122b, and 122c configuring the slot part 122 may be formed so that lengths of teeth T on which the coil 110 is wound are different from each other.

In this case, the first total number of turns obtained by summing up the number of turns of the coil 110 each wound around the plurality of slots 122a forming the first phase may be the same as the second total number of turns obtained by summing up the number of turns of the coil 110 each wound around the plurality of slots 122b forming the second phase.

That is, each of the plurality of slots 122a, 122b, and 122c configuring the slot part 122 may form one phase, some of the plurality of slots 122a, 122b, and 122c may form the same phases, and the others among the plurality of slots 122a, 122b, and 122c may form different phases.

In addition, the first total number of turns obtained by summing up the number of turns of the coil 110 wound around the slots forming the same phases may be the same as the second total number of turns obtained by summing up the number of turns of the coil 110 wound around the slots forming the different phases.

In this case, a part 122a among the plurality of slots 122a, 122b, and 122c may have the first phase, a part 122b among the plurality of slots 122a, 122b, and 122c may have the second phase, and the number of slots 122a forming the first phase and the number of slots 122b forming the second phase may be the same number.

Here, each of the plurality of slots 122a, 122b, and 122c may include teeth T extending inward or outward from the yokes 121 and 221 by a predetermined length and a shoe S formed at the end of each of the teeth T, and the coil 110 may be wound around the teeth T.

Accordingly, even when the yokes 121 and 221 are formed in a non-circular closed loop shape as described above and at least some of the plurality of slots 122a, 122b, and 122c are provided to have the teeth T with different lengths, the shoe S portions formed at the ends of the plurality of slots 122a, 122b, and 122c may be formed to be positioned on a virtual circumference.

That is, when the rotor 1200 is disposed inside the yoke 121 as shown in FIGS. 4 to 6, the plurality of slots 122a, 122b, and 122c configuring the slot part 122 may be disposed to surround a circumferential surface of the rotor 1200.

In addition, when the magnet 1220 is disposed outside the yoke 221 as shown in FIG. 9, each shoe S in the plurality of slots 122a, 122b, and 122c configuring the slot part 122 may be disposed to face the magnet 1220 while being spaced apart from the magnet 1220 by a constant distance.

Accordingly, even when the yokes 121 and 221 are formed in a non-circular closed loop shape as described above, and the plurality of slots 122a, 122b, and 122c are provided to have the teeth T with different lengths, the coil 110 may be all wound around each of the slots 122a, 122b, and 122c regardless of the length of the teeth T by making the total number of turns of the coil 110 wound around the slots forming the same phases equal to each other.

Accordingly, it is possible to implement high output and efficiency of the motor, and increase a degree of freedom in design by freely changing the length of the teeth T of the slot on which the coil 110 is wound by winding the coil 110 around the plurality of slots 122a, 122b, and 122c so that the coil 110 has the same number of turns on each phase even while maximizing the space utilization on which the coil 110 is wound even when the yokes 121 and 221 are formed in a non-circular closed loop shape and the plurality of slots 122a, 122b, and 122c are provided to have the teeth T with different lengths.

As a non-limiting example, the slot part 122 may be formed in three phases including a first phase, a second phase, and a third phase, and each of the first phase, the second phase, and the third phase may be composed of the same number of slots 122a, 122b, and 122c.

Here, the first phase may include U, U', and U", the second phase may include V, V', and V", and the third phase may include W, W', and W".

As a specific example, as shown in FIGS. 4 to 6, when the stator 100 for an electric motor including nine slots 122a, 122b, and 122c extending inward from the non-circular yoke 121 by a certain length is implemented as an internal rotor type electric motor having a 9:10 structure together with the rotor 1200 in which the total number of magnets 1220 is 10, each of the first phase including the U, U', and U", the second phase including the V, V', and V" and the third phase including the W, W', and W" may be formed through three slots 122a, 122b, and 122c, respectively, and the lengths of the teeth of at least some of the slots 122a, 122b, and 122c may be formed to be different from each other.

That is, as shown in FIG. 4, the lengths of the teeth T of one slot 122a forming the U" phase of the first phase, one slot 122b forming the V phase of the second phase, and one slot 122c forming the W' phase of the third phase may be relatively shorter than the lengths of the teeth T of the slots forming the U, U', V', V", W, and W" phases. In this case, the lengths of the teeth T of the slots forming the U, U', V', V", W, and W" phases may be the same as each other.

Similarly, as shown in FIG. 5, the lengths of the teeth T of one slot 122a forming the U" phase of the first phase, one slot 122b forming the V phase of the second phase, and one slot 122c forming the W" phase of the third phase may be relatively shorter than the lengths of the teeth T of the slots forming the U, U', V', V", W, and W' phases. In this case, the lengths of the teeth T of the slots forming the U, U', V', V", W, and W' phases may be the same as each other.

In addition, as shown in FIG. 6, the lengths of the teeth T of one slot 122a forming the U' phase of the first phase, one slot 122b forming the V" phase of the second phase, and one slot 122c forming the W phase of the third phase may be the same as each other, and the lengths of the teeth T of the slots forming the U, U", V, V', W', and W" phases may be relatively shorter or longer than the lengths of the teeth of the slots forming the U', V", and W phases.

As another specific example, as shown in FIG. 9, when a stator 200 for an electric motor including nine slots 122a, 122b, and 122c extending outward from the non-circular yoke 221 by a certain length is implemented as an external rotor type electric motor having a 3:4 structure together with the rotor 1200 in which the total number of magnets 1220 is 12, each of the first phase including the U, U', and U", the second phase including the V, V', and V", and the third phase including the W, W', and W" may be formed through three slots 122a, 122b, and 122c, respectively, and the lengths of the teeth of at least some of the slots 122a, 122b, and 122c may be formed to be different from each other.

That is, as shown in FIG. 9, the lengths of the teeth T of two slots 122a forming the U and U" phases of the first phase, one slot 122b forming the V" phase of the second phase, and one slot 122c forming the W" phase of the third phase may be the same as each other, and the lengths of the teeth T of the slots forming the U', V, V', W', and W' phases may be relatively shorter or longer than the lengths of the teeth of the slots forming the U, U", V", and W" phases.

As described above, the lengths of the teeth of the respective slots extending from the arc portions 121c, 121d, and 221c of the yokes 121 and 221 formed in a non-circular shape by a certain length in the stator cores 120 and 220 according to one embodiment of the present invention may be the same as each other, and the lengths of the teeth of the respective slots extending from the straight portions 121a, 121b, 221a, and 221b of the yokes 121 and 221 by a certain length may be relatively shorter or longer than the lengths of the teeth of the respective slots extending from the arc portions 121c, 121d, and 221c by a certain length.

At this time, the first total number of turns obtained by summing up the number of turns of the coil 110 each wound around three slots 122a forming the U, U', and U" phases of the first phase, the second total number of turns obtained by summing up the number of turns of the coil 110 each wound around three slots 122b forming the V, V', and V" phases of the second phase, and the third total number of turns obtained by summing up the number of turns of the coil 110 each wound around three slots 122c forming the W, W', and W" phases of the third phase may be the same as each other.

As a non-limiting example, the first total number of turns, the second total number of turns, and the third total number of turns may be 47 turns. In this case, the coil 110 may be wound around each of the two slots 122a forming the U and U' phases of the first phase in 22 turns, and the coil 110 may be wound around one slot 122a forming the U" phase thereof in 3 turns. In addition, the coil 110 may be wound around each of the two slots 122a forming the V' and V" phases of the second phase in 22 turns, and the coil 110 may be wound around one slot 122a forming the V phase thereof in 3 turns. Likewise, the coil 110 can be wound around each of the two slots 122a forming the W and W" phases of the third phase in 22 turns, and the coil 110 may be wound around one slot 122a forming the W' phase thereof in 3 turns.

Accordingly, the total number of turns of the coil 110 wound around the three slots 122a forming the first phase, the total number of turns of the coil 110 wound around the three slots 122b forming the second phase, and the total number of turns of the coil 110 wound around the three slots 122c forming the third phase may be all 47 turns equally.

However, the number of turns of the coil 110 each wound around the plurality of slots 122a, 122b, and 122c is not limited thereto, and may be appropriately changed depending on the position of the slot and/or the length of the teeth.

Accordingly, in the stators 100 and 200 for an electric motor according to one embodiment of the present invention, even when the yokes 121 and 221 are formed in a non-circular shape and the lengths of the teeth T of at least some of the plurality of slots 122a, 122b, 122c extending from the yokes 121 and 221 are provided to be different from each other, the total number of turns of the coil wound around the slots 122a, 122b, and 122c forming each phase may be the same as each other, and the shoe S portions formed at the ends of the respective slots 122a, 122b, and 122c may be disposed to be positioned on the same virtual circumference.

Accordingly, even when the yokes 121 and 221 are formed in the non-circular shape, the shoe S portions of the slots 122a, 122b, and 122c forming each phase may be disposed to surround the magnet 1220 or may be surrounded by the magnet 1220 at the same distance as the magnet 1220 of the rotor 1200, and the coil 110 may be wound around all slots 122a, 122b, and 122c with the appropriate number of turns regardless of the lengths of the teeth T of the respective slots.

Accordingly, in the electric motors to which the stators 100 and 200 for an electric motor according to one embodiment of the present invention are applied, even when the lengths of the teeth T of the slots 122a, 122b, and 122c forming each phase are different from each other according to the shapes of the yokes 121 and 221, the shoes S of the respective slots may be disposed to be positioned at the same distance as the magnet 1220 in a state in which the total number of turns of the coil 110 wound around the slots forming each phase is the same, thereby implementing the uniform driving force.

In addition, in the electric motors to which the stators 100 and 200 for an electric motor according to one embodiment of the present invention are applied, the number of turns of the coil 110 wound around the respective teeth T may be freely changed depending on the length of the teeth T, so that the yokes 121 and 221 may be formed in various shapes.

Accordingly, even when a mechanical interference problem occurs in the process of fixing the stators 100 and 200 for an electric motor according to one embodiment of the present invention, it is possible to increase the degree of freedom in design by changing the shapes of the yokes 121 and 221 to solve the mechanical interference problem.

That is, when it is necessary to fasten a fastening member, such as a bolt, to the yoke 221 in the process of mounting the stators 100 and 200 for an electric motor in the housing of the electric motor, the shapes of the yokes 121 and 221 and the lengths of the teeth of the slots may be changed so that the fastened portions may be formed at appropriate positions of the yoke 121 and 221.

Accordingly, the electric motors to which the stators 100 and 200 for an electric motor according to one embodiment of the present invention are applied can secure the degree of freedom in design even while implementing the uniform driving force.

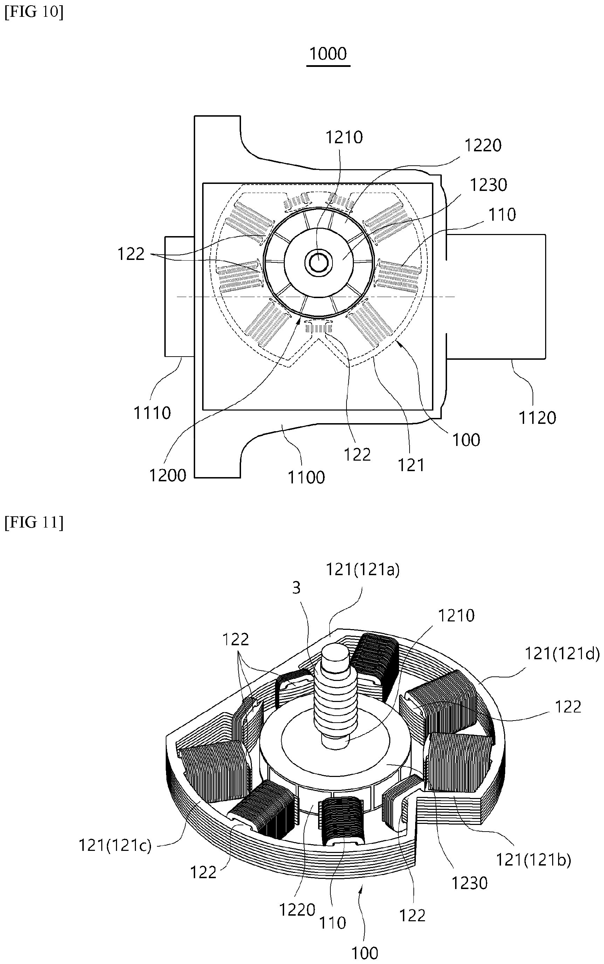

In addition, referring to FIG. 10, even when a rotor shaft 1210 configuring the electric motor 1000 is disposed at a position tilted to one side from the center of the housing 1100, the plurality of slots 122a, 122b, and 122c may be disposed to surround the circumference of the rotor 1200 as a whole in a state in which the coil 110 is wound with the appropriate number of turns.

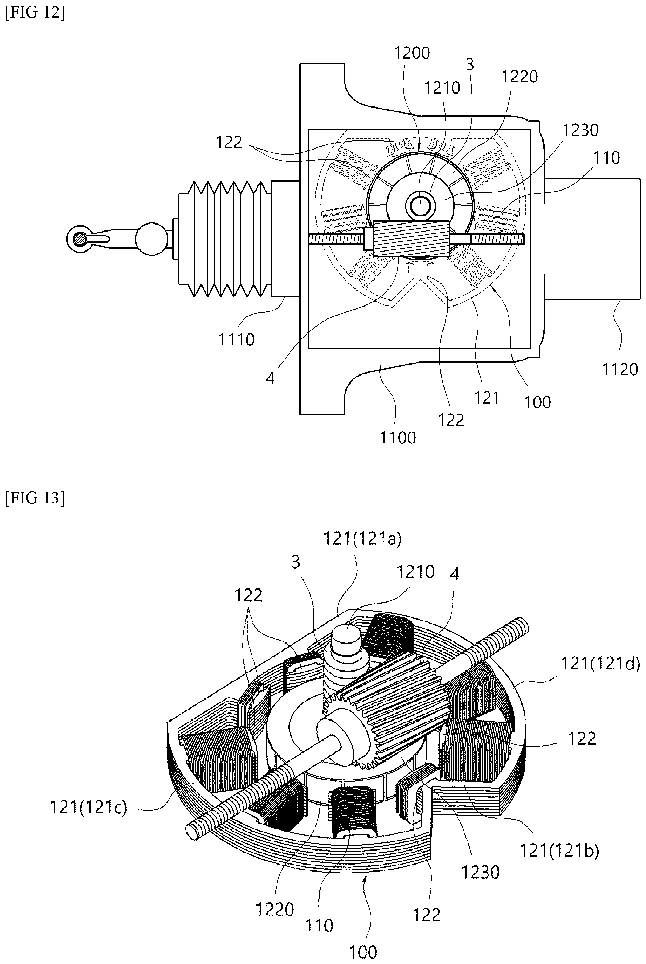

Accordingly, referring to FIG. 12, even when the electric motor 1000 is mounted at a predetermined position so that the rotor shaft 1210 is eccentrically connected to the drive rod 2 in a limited space having a predetermined size and shape, the plurality of slots 122a, 122b, 122c may be disposed to surround the circumference of the rotor 1200 as a whole.

Accordingly, the electric motors to which the stators 100 and 200 for an electric motor according to one embodiment of the present invention are applied can secure the degree of freedom in design even while implementing the uniform driving force.

In the drawings and the description, when the stators 100 and 200 for an electric motor according to one embodiment of the present invention are applied to a multi-phase motor, the multi-phase motor having the 9:10 structure in which the total number of slots 122a, 122b, and 122c is 9 and the total number of magnets 1220 of the rotor 1200 is 10 or the multi-phase motor having the 3:4 structure in which the total number of slots 122a, 122b, and 122c is 9 and the total number of magnets 1220 of the rotor 1200 is 12 has been described as an example, but the present invention is not limited thereto, and when the total number of slots is 6 or more, it may be applied without limitation.

For example, the stators 100 and 200 for an electric motor according to one embodiment of the present invention may be applied to not only an electric motor having a 3:2 structure in which the total number of slots is 9 and the total number of magnets 1220 is 6 but also an electric motor having a 9:8 structure in which the total number of slots is 9 and the total number of magnets is 8.

In addition, the stators 100 and 200 for an electric motor according to one embodiment of the present invention may be applied to not only the three-phase motor having the above-described structure but also a multi-phase motor having a different structure.

In addition, in the drawings and the description, the coil 110 in the stators 100 and 200 for an electric motor according to one embodiment of the present invention has been illustrated as being wound around all of the slots 122a, 122b, and 122c, but the present invention is not limited thereto, and when the total number of turns of the coil wound around the slots forming each phase is the same, the coil may not be wound around some of the plurality of slots.

Meanwhile, the above-described stators 100 and 200 for an electric motor may be implemented by the electric motor 1000.

As described above, the electric motor 1000 according to one embodiment of the present invention may be applied to various devices such as industrial equipment, home appliances, vehicles, and the like.

As a non-limiting example, the electric motor 1000 may be used for opening/closing a valve installed in a vehicle, and the valve may be an engine intake valve configured to adjust an air intake amount to an engine of the vehicle. In this case, the valve may be opened and closed through the drive rod 2, and the electric motor 1000 may provide a driving force capable of moving the drive rod 2. However, the application target of the electric motor 1000 according to one embodiment of the present invention is not limited thereto.

Hereinafter, for convenience of description, the electric motor 1000 according to one embodiment of the present invention will be described as being used as the electric motor for driving the vehicle valve.

That is, the electric motor 1000 according to one embodiment of the present invention may include a housing 1100, a rotor 1200, and a stator 100 as shown in FIG. 10, and the stator 100 may be the stator 100 for an electric motor shown in FIGS. 1 to 4.

However, the stator 100 for an electric motor is not limited thereto, and the stator 200 shown in FIGS. 5 to 9 may also be applied in the same manner, and the rotor 1200 may be appropriately changed depending on the shapes of the stators 100 and 200. That is, the rotor 1200 may be changed to an internal type rotor or an external type rotor according to the shape of the stator.

The housing 1100 may be mounted somewhere in a vehicle such as an engine room of the vehicle, and the rotor 1200 and the stator 100 may be installed therein.

The housing 1100 may have a coupling portion 1110 formed at one side so that the drive rod 2 gear-coupled to the rotor 1200 may enter.

In addition, the housing 1100 may include a connector part 1120 for electrical connection with a circuit board (not shown) installed therein in order to control the driving of the rotor 1200 and the stator 100.

The housing 1100 may also be made of a material having a heat dissipation property to dissipate heat generated during operation to the outside. For example, the housing 1100 may be made of a known heat-dissipating plastic material.

The rotor 1200 may include a plurality of magnets 1220 disposed on the circumference of the rotor shaft 1210 having a certain length and may be rotatably mounted in the housing 1100.

That is, the rotor 1200 may include the rotor shaft 1210 rotatably mounted in the housing 1100 and a rotor core 1230 formed to surround the circumference of the rotor shaft 1210, and the plurality of magnets 1220 may be disposed in a circumferential direction of the rotor core 1230.

As shown in FIG. 11, the rotor 1200 may be disposed to be positioned inside the stator 100. Accordingly, when a current is supplied to the coil 110 of the stator 100, the rotor 1200 may be rotated through the interaction with a magnetic field generated from the coil 110.

At this time, the rotor shaft 1210 may be gear-coupled to the drive rod 2 entering the inside of the housing 1100 through the coupling portion 1110 via a gear unit, and the rotor shaft 1210 may be eccentrically connected to the drive rod 2 inside the housing 1100. For example, the gear unit may be a worm wheel 3 and a worm gear 4.

Specifically, as shown in FIGS. 12 and 13, the rotor shaft 1210 may be rotatably mounted at a position that is eccentric from the center of the housing 1100, and the drive rod 2 may be disposed in a direction matching with a virtual center axis of the housing 1100.

In this case, as shown in FIGS. 11 and 13, the worm wheel 3 may be axially coupled to the end of the rotor shaft 1210, and as shown in FIG. 13, the worm gear 4 gear-coupled to the worm wheel 3 may be provided on the drive rod 2.

Accordingly, the rotor shaft 1210 and the drive rod 2 may be eccentrically connected to each other through the worm wheel 3 and the worm gear 4, and when the rotor shaft 1210 rotates, the drive rod 2 may reciprocate according to a rotation direction of the rotor shaft 1210. Accordingly, the valve connected to the drive rod 2 may be opened and closed according to a moving direction of the drive rod 2.

The stator 100 may be disposed to surround the magnet 1220 of the rotor 1200.

That is, the stator 100 may include at least one coil 110 and a stator core 120, the stator core 120 may include a yoke 121 and a slot part 122, and the coil 110 may be wound around the slot part 122.

As the stator 100, the stator 100 for an electric motor described above with reference to FIGS. 1 to 4 may be applied as it is.

That is, the yoke 121 may be formed in a non-circular closed loop shape as described above, and the slot part 122 may include a plurality of slots 122a, 122b, and 122c.

Since specific contents of the yoke 121 and the slot part 122 are the same as those described above, a detailed description thereof will be omitted.

Accordingly, in the electric motor 1000 according to one embodiment of the present invention, as shown in FIG. 12, even when the rotor shaft 1210 is mounted at a position tilted to one side other than a central portion of the housing 1100 inside the housing 1100, and the drive rod 2 and the rotor shaft 1210 are eccentrically connected to each other, the plurality of slots 122a, 122b, and 122c on which the coil 110 is wound may be disposed to surround the circumference of the rotor shaft 1210.

In particular, as shown in FIGS. 10 and 12, when the stator core 120 is mounted inside the housing 1100 so that the above-described first straight portion 121a is parallel to an inner wall surface of the housing 1100, it is possible to maximize space utilization within a limited space.

That is, even when the rotor shaft 1210 is disposed at the position tilted to one side from the center of the housing 1100 so that the rotor shaft 1210 may be eccentrically connected to the drive rod 2, it is possible to implement the maximum torque and the maximum efficiency by winding the coil 110 around the teeth T of all slots 122a, 122b, and 122c with an appropriate number of turns regardless of the length of the teeth T.

Accordingly, when the rotor shaft 1210 is disposed at the position tilted to one side from the center of the housing 1100 so that the rotor shaft 1210 may be eccentrically connected to the drive rod 2, as shown in FIG. 14, the plurality of slots 122a, 122b, and 122c on which the coil is wound are disposed to surround only a part of the entire circumference of the rotor 20 in the conventional electric motor 1, but in the electric motor 1000 according to one embodiment of the present invention, as shown in FIG. 12, all slots 122a, 122b, and 122c on which the coil 110 is wound may be disposed to surround the entire circumference of the rotor 1200 by appropriately changing the number of turns of the coil 110 wound around the respective slots 122a, 122b, and 122c.

Accordingly, in the electric motor 1000 according to one embodiment of the present invention, even when the rotor shaft 1210 and the drive rod 2 are eccentrically connected to each other in a limited space with a predetermined size and shape, the slots 122a, 122b, and 122c on which the coil 110 is wound may be disposed to surround the entire circumference of the rotor 1200.

Accordingly, in the electric motor 1000 according to one embodiment of the present invention, it is possible to prevent the reduction in efficiency due to heat loss by reducing the amount of heat generated during operation of the motor while maintaining the existing size and mounted position of the housing 1100 and the eccentric connection between the drive rod 2 and the rotor shaft 1210.

While one embodiment of the present invention has been described above, the spirit of the present invention is not limited to the embodiments presented in this specification, and those skilled in the art who understand the spirit of the present invention will be able to easily propose other embodiments by adding, changing, deleting, and adding components without departing from the same spirit, but this will also be included within the spirit range of the present invention.

## Claims

1. A stator for an electric motor, comprising:
at least one coil; and
a stator core including a yoke formed in a closed loop shape, and a slot part extending from the yoke by a certain length,
wherein the slot part includes a plurality of slots forming a multi-phase including a first phase and a second phase different from the first phase, and
the total number of turns obtained by summing up the number of turns of the coil each wound around the plurality of slots forming the first phase is the same as the total number of turns obtained by summing up the number of turns of the coil each wound around the plurality of slots forming the second phase.

2. The stator of claim 1, wherein at least some of the plurality of slots are formed so that lengths of teeth on which the coil is wound have different lengths.

3. The stator of claim 1, wherein the plurality of slots are formed to extend inward from the yoke by a certain length.

4. The stator of claim 1, wherein the plurality of slots are formed to extend inward from the yoke by a certain length.

5. The stator of claim 1, wherein the yoke is formed in a non-circular shape including at least one straight portion.

6. The stator of claim 5, wherein the yoke includes:
a first arc portion formed to have a predetermined curvature;
a second arc portion formed to have a predetermined curvature, and disposed not to be connected to the first arc portion;
a first straight portion configured to interconnect one end of the first arc portion and one end of the second arc portion; and
a second straight portion configured to interconnect the other end of the first arc portion and the other end of the second arc portion.

7. The stator of claim 6, wherein the second straight portion includes a first portion connected to an end of the first arc portion, and a second portion connected to an end of the first portion and connected to an end of the second arc portion, and
the second portion is connected to one end of the first portion to have a predetermined angle except for 0 degrees with the first portion.

8. The stator of claim 6, wherein the first arc portion and the second arc portion are formed to have different lengths.

9. The stator of claim 1, wherein the slot part is formed in three phases including U, V, and W phases.

10. An electric motor comprising:
a housing;
a rotor including a rotor shaft rotatably mounted in the housing and a plurality of magnets disposed in a circumferential direction of the rotor shaft; and
a stator fixed to the housing, and in which a coil is wound around at least one slot,
wherein the stator is the stator for an electric motor of any one of claims 1 to 9.

11. The electric motor of claim 10, wherein the rotor shaft is gear-coupled to a drive rod entering an inside of the housing via a gear unit, and
the drive rod is eccentrically connected to the rotor shaft via the gear unit.
